Europäisches Patentamt

European Patent Office

Office européen des brevets

(11) Numéro de publication: **0 219 590**
**A1**

## (12) DEMANDE DE BREVET EUROPEEN

(21) Numéro de dépôt: **85420182.9**

(22) Date de dépôt: **17.10.85**

(51) Int. Cl.⁴: **B65D 65/16 , G06K 19/00**

(43) Date de publication de la demande:
**29.04.87 Bulletin 87/18**

(84) Etats contractants désignés:
**BE DE FR GB IT LU NL**

(71) Demandeur: **BLACHON & CIE**
**Rue Traversière**
**F-43220 Dunières(FR)**

(72) Inventeur: **Blanchon, Georges**
**Rue Traversière**
**F-43 220 Dunières(FR)**

(74) Mandataire: **Maisonnier, Jean**
**Bureau Maisonnier 28 Rue Servient**
**F-69003 Lyon(FR)**

(54) **Procédé et dispositif pour brouiller à travers un emballage transparent, la lecture de mentions symbolisées par un code à barres.**

(57) L'invention concerne un film souple et transparent (1) , pour emballer des produits unitaires (17).

Sur le film (1) , est imprimé un réseau de lignes de brouillage (5) , dont chacune a un tracé non rectiligne .

Application : chacune des étiquettes unitaires - (11) dont les indications sont codées par un code à barres , devient illisible à travers l'emballage (1) . Seule reste visible l'étiquette globale (13) dont le code caractérise l'ensemble du lot (18) des boîtes - (17).

Fig 5

EP 0 219 590 A1

## " PROCEDE ET DISPOSITIF POUR BROUILLER A TRAVERS UN EMBALLAGE TRANSPARENT , LA LECTURE DE MENTIONS SYMBOLISEES PAR UN CODE A BARRES "

La présente invention est relative à un procédé et à un dispositif , pour brouiller la lecture , à travers une feuille d'emballage transparent , de différentes mentions , notamment lorsqu'elles sont symbolisées par un code à barres .

On sait que , de plus en plus souvent , sont utilisés des codes à barres , dont la lecture s'effectue automatiquement , par passage devant la tête d'un lecteur magnétique . On peut ainsi lire automatiquement le numéro d'un chèque , l'adresse d'un courrier , ou le prix d'un objet. En particulier , dans les Grands Magasins , il est fréquent d'appliquer sur chacun des articles en vente , une étiquette portant , codées avec un code à barres , diverses indications , dont le prix à payer . Lorsque le client présente cet article à la caissière , celle-ci passe son capteur de lecture devant l'étiquette , dont les indications sont ainsi automatiquement stockées dans un ordinateur , prévu pour effectuer la compatibilité et généralement aussi , pour gérer les approvisionnements.

Toutefois , un problème se pose dans le cas de plus en plus fréquent , où plusieurs articles unitaires sont groupés en un lot , que le Client achète dans son ensemble . En effet , si plusieurs produits unitaires , portant chacun son étiquette individuelle , sont groupés dans un même emballage commun ( souvent constitué par un sachet en matière plastique souple et transparente ) , le prix de l'ensemble du lot est porté sur une étiquette globale , apposée sur le sachet d'emballage général . Ainsi , lorsque l'acheteur présente son produit à la caissière , un risque d'erreur existe pour la lecture du prix . En effet , si , par inadvertance , la caissière passe son capteur , non pas sur l'étiquette codée portant le prix d'ensemble , mais sur l'une des étiquettes individuelles des produits unitaires , c'est seulement le prix unitaire qui sera réclamé au client ,au détriment du magasin .

La présente invention a pour but d'éviter ces inconvénients , en réalisant un film d'emballage souple, et transparent , qui laisse apparaître les produits unitaires contenus , mais rende impossible toute lecture d'un code à barres à travers sa paroi transparente.

Un film souple selon l'invention est caractérisé en ce que , sur une partie au moins de sa surface , est tracé un réseau de lignes non rectilignes .

Suivant une autre caractéristique de l'invention , les lignes sont tracées par un procédé d'impression .

Suivant une autre caractéristique de l'invention , les lignes de brouillage sont tracées suivant un réseau serré , la distance entre deux lignes consécutives étant du même ordre de grandeur que la distance moyenne des barres successives du code à barres utilisé .

Suivant une autre caractéristique de l'invention , les lignes sont toutes identiques entre elles , imprimées les unes à côté des autres , suivant un profil en zigzag .

Suivant une autre caractéristique de l'invention , chaque ligne a un tracé sinusoïdal .

Suivant une autre caractéristique de l'invention , le réseau des lignes de brouillage est imprimé sur une partie seulement de la feuille transparente souple , par exemple suivant une bande longitudinale .

Suivant une autre caractéristique de l'invention , les lignes de brouillage sont imprimées sur toute la surface de la feuille souple.

Suivant une autre caractéristique de l'invention , un réseau de lignes sinusoïdales ou en zigzags est imprimé en continu , sur un film souple , par exemple à base de polyoléifine .

Le dessin annexé , donné à titre d'exemple non limitatif , permettra de mieux comprendre les caractéristiques de l'invention.

Figures 1 , 2 , 3 , illustrent plusieurs tracés possibles , pour les lignes de brouillage selon l'invention.

Figure 4 montre une variante possible, où les lignes de brouillage sont imprimées sur toute la surface de la feuille d'emballage.

Figure 5 montre une variante de six produits unitaires, emballés pour former un lot unique, proposé à la vente.

Figure 6 montre une autre variante, où plusieurs sachets unitaires sont groupés dans un seul sachet selon l'invention.

Figure 7 illustre le fonctionnement du procédé de brouillage selon l'invention, par exemple pour lire l'étiquette codée d'un prix, dans un Grand Magasin.

Figure 8 montre une autre variante d'un film transparent brouillé selon l'invention.

Figure 9 illustre le mode d'utilisation de cette variante pour constituer un lot de plusieurs produits unitaires.

Figure 10 montre le lot ainsi obtenu pour être proposé à la vente.

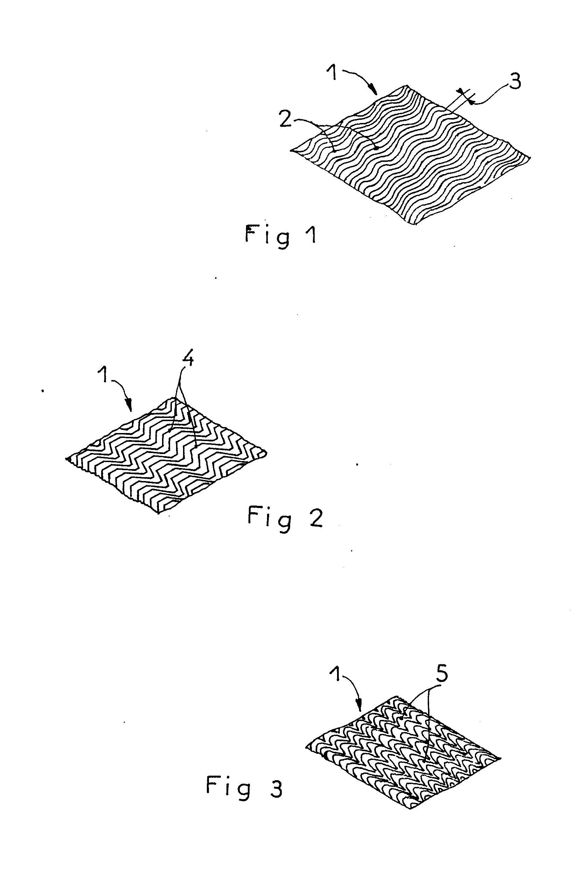

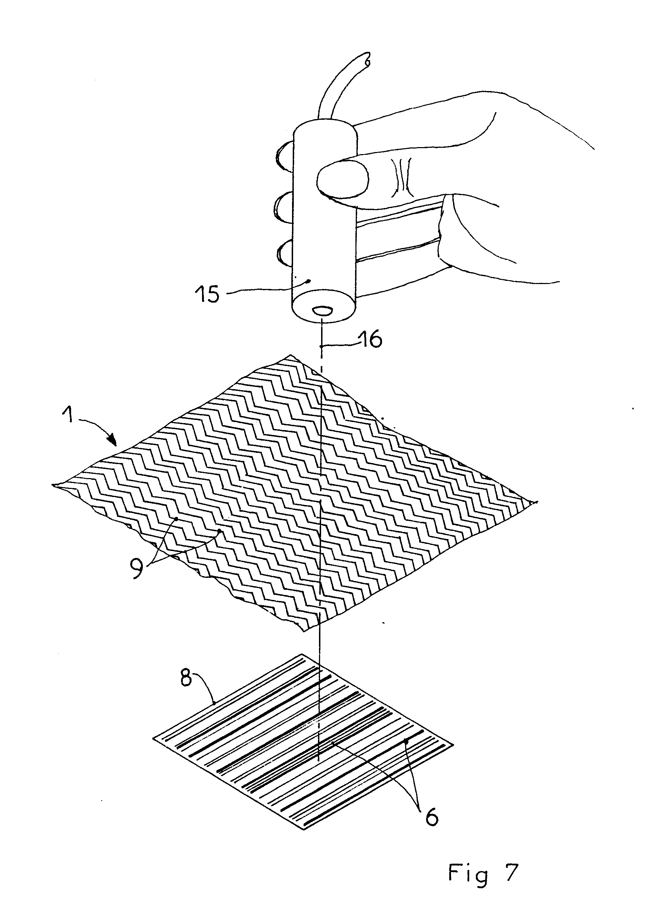

On a représenté sur les dessins un film d'emballage souple et transparent 1 , réalisé par exemple en matière plastique . Sur ce film 1, est imprimé un réseau de lignes qui , dans le cas de la figure 2 , sont sensiblement sinusoïdales . Ces lignes 2 peuvent être , par exemple , imprimées en noir . Elles sont séparées les unes des autres par un espacement 3 , qui peut être , par exemple , de l'ordre de un à deux millimètres . Dans le cas de la figure 2 , les lignes de brouillage 4 sont imprimées suivant un tracé en forme de grecque . Sur le film 1 de la figure 3 , chaque ligne de brouillage 5 a un tracé formé par une succession d'arcades . Bien entendu , d'autre tracés pourraient être adoptés . Ils ont cependant tous en commun le fait de ne pas être simplement rectilignes , ce qui comporterait le risque de les amener en coïncidence complète avec les barres de codage 6 ( figure 7 ), couramment tracées sur des etiquettes 8 indiquant par exemple le prix d'une marchandise .

Par exemple , les lignes 9 imprimées sur le film souple 1 de la figure 7 ont chacune un tracé en zizag ou en ligne brisée .

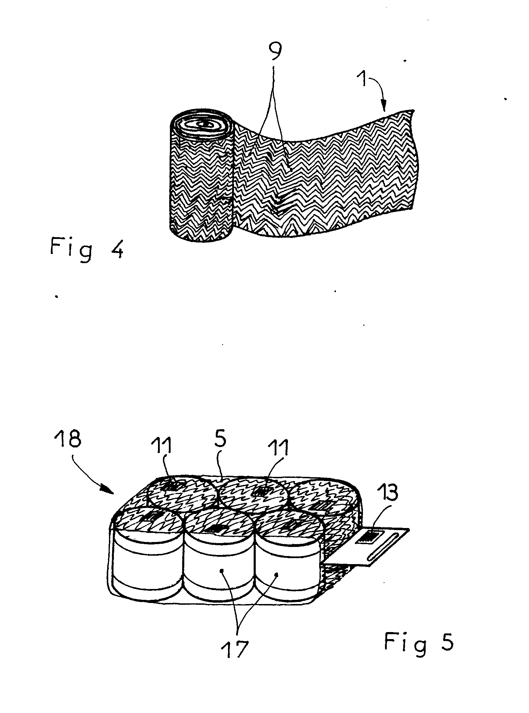

Les lignes de brouillage telles que 2 , 4 , 5 , 9 , peuvent être tracées sur la totalité du film 1 (cas de la figure 4 ) , ou bien sur seulement une partie de ce film .

Le fonctionnement est le suivant :

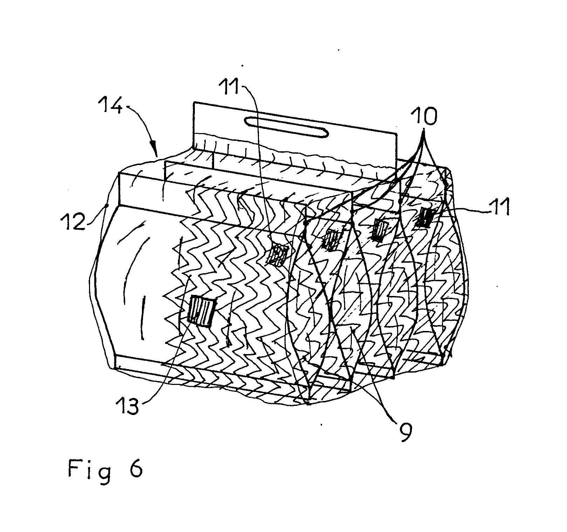

On a supposé sur la figure 6 , que l'utilisateur peut présenter à la vente , un lot de quatre sachets unitaires 10 , dont chacun porte déjà son étiquette individuelle 11 , où le prix unitaire est codifié selon le code à barres usuel . Selon l'invention , les quatre sachets 10 sont disposés dans une enveloppe 12 , formée à partir du film 1 selon l'invention . Ce film 1 comporte donc des lignes de brouillage telles que 9 . Sur une des faces de l'enveloppe 12 on appose une nouvelle étiquette 13 , sur laquelle figure l'indication en code à barres , du prix de l'ensemble du lot 14 ainsi offert à la vente .

On sait que , lorsque l'acheteur se présente à la caisse, la caissière passe son capteur de lecture 15 sur chacune des étiquettes codées 8. Ainsi, le rayon 16 du capteur 15 lit les indications du code à barres 6, pour les envoyer vers l'ordinateur du magasin. On sait que ces indications sont ensuite traitées, d'une part pour gérer les stocks du magasin, d'autre part pour afficher au client le prix qu'il doit payer .

Dans le cas du lot 14, il est clair que la caissière doit promener le rayon 16 de son capteur 15 sur l'étiquette 13 indiquant le prix global, et non pas sur l'une ou l'autre des étiquettes 11 indiquant le prix unitaire de de chaque pochette 10. Il y aurait là un risque de fausse manoeuvre si le film constituant l'enveloppe 14 était entièrement transparent. Grâce à la présence des lignes de brouillage 9 selon l'invention, ce risque de fausse manoeuvre se trouve supprimé, car, seule, l'étiquette globale 13 reste lisible au capteur 15. Si la caissière venait à promener son capteur 15 sur l'une ou l'autre des étiquettes 11, la présence des lignes de brouillage 9 signalerait aussitôt l'erreur,sans enregistrer aucune des indications érronées.

Dans l'exemple illustré sur la figure 5 , le film brouillé 1 selon l'invention est utilisé simplement pour cercler les six boîtes 17 formant un lot 18, sans pour autant constituer une enveloppe entourant l'ensemble sous toutes ses faces . Il suffit que le cerclage 1 recouvre chacune des étiquettes unitaires 11, de chaque boîte 17, pour ne laisser visible à la lecture d'un capteur 15, qu'une seule étiquette globale 13 .

Bien entendu, on ne quitterait pas le cadre de l'invention en modifiant d'une façon quelconque le tracé des lignes de brouillage 2, 4, 5, 9. A la limite elles pourraient être toutes des lignes droites, à condition de ne pas se trouver orientées parallélement aux barres de codage 6 . C'est dans ce sens que devra être compris le terme " non rectilignes " dans les revendications qui suivent .

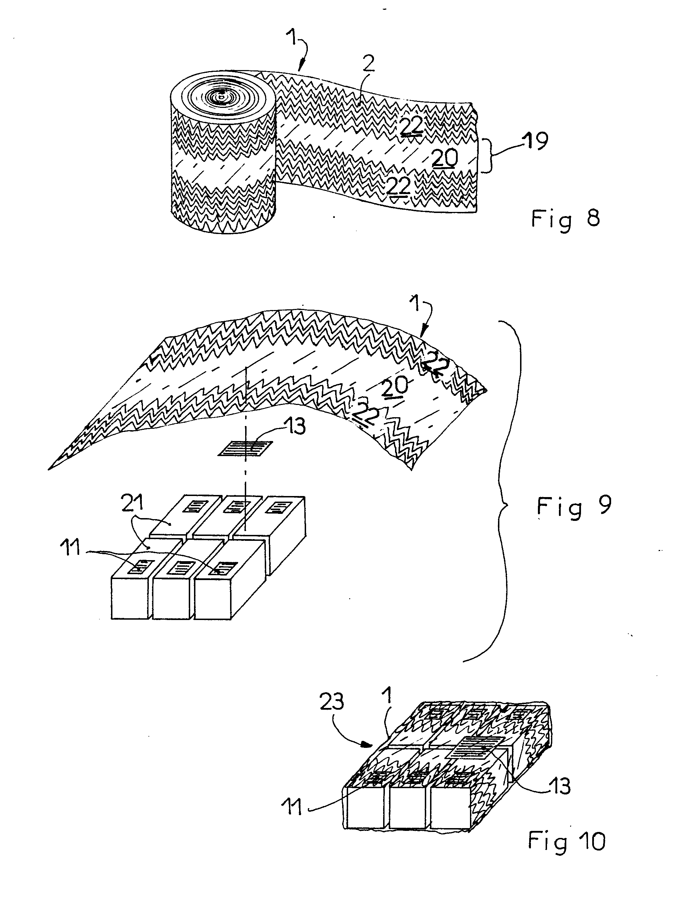

Dans la variante de la Fig.8, le film souple et transparent 1 est brouillé comme précédemment par un réseau de lignes imprimées 2 non rectilignes, mais sur une partie seulement de sa surface . Autrement dit, il comporte sur une largeur 19, une bande 20 laissée vièrge et transparente sans lignes de brouillage 2 .

Pour grouper à la vente plusieurs produits unitaires 21 portant chacun son étiquette unitaire 11, on les place les uns à coté des autres et on les recouvre d'une feuille découpée dans le film 1 en prenant soin que les étiquettes unitaires 11 soient entièrement recouvertes par des lignes de brouillage 2 ( c'est-à-dire par les bandes brouillées 22 situées sur le film 1 de part et d'autre de la bande vièrge 20 ) . Par contre, avant de replier le film 1 autour des produits 21, on a pris soin d'appliquer ou d'imprimer contre la face intérieure de sa bande vièrge 20, l'étiquette globale 13 correspondant à l'ensemble du lot 23 ainsi réalisé . L'étiquette 13 reste donc parfaitement lisible par transparence sur le lot final 23 .

On voit sur la Fig.10 que cette variante présente le double avantage suivant :

-d'une part les étiquettes unitaires 11 sont masquées par les lignes de brouillage 2, ce qui élimine tout risque d'erreur pour la caissière;

-d'autre part l'étiquette 13 étant à l'intérieur sous le film 1 qui la protège, elle est inviolable et cela élimine toute possibilité de fraude .

**Revendications**

1 -Film d'emballage souple et transparent (1) qui laisse apparaître les produits unitaires contenus dans l'emballage qu'il constitue , caractérisé en ce que sur une partie au moins de sa surface , est tracé un réseau de lignes non rectilignes (2) , (4) ,- (5) , (9) .

2 -Film souple suivant la revendication 1, caractérisé en ce que les lignes sont des lignes de brouillage (2) ,(4) ,(5) , (9) , tracées par un procédé d'impression.

3 -Film souple suivant l'une quelconque des revendications précédentes , caractérisé en ce que les lignes de brouillage (2) ,(4) ,(5) ,(9) , sont tracées suivant un réseau serré , la distance entre deux lignes consécutives étant du même ordre de grandeur que la distance moyenne des barres successives (6) du code utilisé sur des étiquettes (8) de type connu.

4 -Film souple suivant l'une quelconque des revendications précédentes , caractérisé en ce que les lignes (9) sont toutes identiques entre elles , imprimées les unes à côté des autres , suivant un profil en zigzag .

5 -Film souple suivant l'une quelconque des revendications 1 à 3 , caractérisé en ce que chaque ligne de brouillage (2) a un tracé sinusoïdal

6 -Film souple suivant l'une quelconque des revendications 1 à 3 , caractérisé én ce que chaque ligne de brouillage (5) a un tracé en forme de grecque.

7 -Film souple suivant l'une quelconque des revendications 1 à 3 , caractérisé en ce que chaque ligne de brouillage (5) a un tracé formé par des arceaux successifs.

8 -Film souple suivant l'une quelconque des revendications précédentes , caractérisé en ce que le réseau des lignes de brouillage (2) ,(4) ,(5) , (9) , est imprimé sur une partie seulement de la feuille transparente souple .

9 -Film souple suivant l'une quelconque des revendications des revendications 1 à 8 , caractérisé en ce que les lignes de brouillage (2) ,(4) ,(5) ,(9) , sont imprimées sur toute la surface du film souple (1).

10 -Film souple suivant l'une quelconque des revendications précédentes , caractérisé en ce qu'une partie de sa surface (bande (20) est dépourvue de lignes de brouillage (2) ,(4) ,(5) ,(9) , la face interne de cette bande (20) étant utilisée pour recevoir une étiquette (13) dont la lecture s'effectue ensuite par transparenxe à trabers le film (1).

Fig 1

Fig 2

Fig 3

Fig 4

Fig 5

Fig 6

Fig 7

Fig 8

Fig 9

Fig 10

Office européen
des brevets

**RAPPORT DE RECHERCHE EUROPEENNE**

Numéro de la demande

EP 85 42 0182

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 561 138 (STANNIOLFABRIK BURGDORF)<br>* Colonne 1, ligne 1 - colonne 2, ligne 21 * | 1,2,8, 10 | B 65 D 65/16<br>G 06 K 19/00 |
| A | US-A-3 086 650 (REYNOLDS METALS)<br>* Figures 1-5; colònne 2, lignes 42-57 * | 1,9 | |
| A | DE-A-3 140 244 (TCHIBO-FRISCH-RÖST-KAFEE)<br>* Figure 1; page 6, alinéa 2 * | 1 | |

---

DOMAINES TECHNIQUES
RECHERCHES (Int. Cl.4)

B 65 D
G 06 K

Le présent rapport de recherche a été établi pour toutes les revendications

| Lieu de la recherche | Date d'achèvement de la recherche | Examinateur |
|---|---|---|
| LA HAYE | 18-06-1986 | FORLEN G.A. |